# EUROPÄISCHE PATENTSCHRIFT

(11) **EP 1 483 303 B1**
(45) Veröffentlichungstag und Bekanntmachung des Hinweises auf die Patenterteilung: **31.05.2006**
(21) Anmeldenummer: 03711904.7
(22) Anmeldetag: 27.02.2003
(51) Int. Cl.: C08F 110/10, C08F 2/38, C08F 4/00, C08F 4/06, C08F 8/00

(54) **VERFAHREN ZUR HERSTELLUNG VON ISOBUTENPOLYMEREN**
METHOD FOR THE PRODUCTION OF ISOBUTENE POLYMERS
PROCEDE DE FABRICATION DE POLYMERES ISOBUTENE

(30) Priorität: 04.03.2002 DE 10209404; 16.07.2002 DE 10232157
(43) Veröffentlichungstag der Anmeldung: 08.12.2004
(73) Patentinhaber: BASF Aktiengesellschaft, 67056 Ludwigshafen (DE)
(72) Erfinder: LANG, Gabriele, 68167 Mannheim (DE); LANGE, Arno, 67098 Bad Dürkheim (DE); RATH, Hans, Peter, 67269 Grünstadt (DE); MACH, Helmut, 69115 Heidelberg (DE)
(74) Vertreter: Reitstötter - Kinzebach
(86) Internationale Anmeldenummer: PCT/EP2003/002038
(87) Internationale Veröffentlichungsnummer: WO 2003/074577

(56) Entgegenhaltungen:
- EP-A- 0 264 214
- EP-A- 0 722 957
- WO-A-00/63256
- WO-A-02/16452
- WO-A-02/48215
- US-A- 2 628 955
- US-A- 5 169 914

## Beschreibung

Die vorliegende Erfindung betrifft ein Verfahren zur Herstellung eines Isobutenpolymers sowie das nach dem Verfahren erhältliche Isobutenpolymer und bestimmte Funktionalisierungsprodukte davon.

Homo- und Copolymere des Isobutens finden in vielfältiger Weise Verwendung, beispielsweise zur Herstellung von Kraftstoff- und Schmierstoff-Additiven, als Elastomere, als Klebstoffe oder Klebrohstoffe oder als Grundbestandteil von Dichtungs- und Versiegelungsmassen.

Die Herstellung von Isobutenpolymeren durch lebende kationische Polymerisation von Isobuten ist bekannt. Das eingesetzte Initiatorsystem umfasst in der Regel eine Lewis-Säure und eine organische Verbindung, die mit der Lewis-Säure ein Carbokation oder einen kationogenen Komplex bildet.

Für die Weiterverarbeitung, beispielsweise zu Dichtungs- und Versiegelungsmassen oder zu Klebe(roh)stoffen, besonders geeignete Isobutenpolymere sind telechel, d.h. sie weisen zwei oder mehr reaktive Endgruppen auf. Bei diesen Endgruppen handelt es sich vor allem um Kohlenstoff-Kohlenstoff-Doppelbindungen, die sich weiter funktionalisieren lassen, oder um mit einem Terminierungsagens funktionalisierte Gruppen. So beschreibt die EP-A 722 957 die Herstellung telecheler Isobuten-Polymere unter Verwendung eines mindestens difunktionellen Initiators, wie Dicumylchlorid. Nachteilig an den bekannten Verfahren ist, dass die beschriebenen aromatischen Initiatoren zu Indanyl- oder Diindangruppen reagieren können (vgl. Cr. Pratrap, S.A. Mustafa, J.P. Heller, J. Polym. Sci. Part A, Polym. Chem. 1993, 31, S. 2387-2391), was die gezielte Synthese definierter telecheler Isobutenpolymere beeinträchtigt.

Aufgabe der vorliegenden Erfindung war daher, ein Verfahren bereitzustellen, mit dem definierte Isobutenpolymere, vorzugsweise telechele Isobutenpolymere, mit einem einfachen Initiatorsystem erhältlich sind.

Die Aufgabe wird durch ein Verfahren zur Herstellung eines Isobutenpolymers gelöst, bei dem man
a) Isobuten und
b) eine Verbindung der Formel I 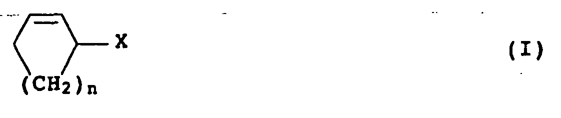 worin
   X für Halogen, C₁-C₆-Alkoxy oder C₁-C₆-Acyloxy und
   n für 1, 2 oder 3 steht,
   in Gegenwart
c) einer Lewis-Säure
umsetzt.

Halogen steht bevorzugt für Chlor, Brom oder Iod und insbesondere für Chlor.

Geeignete Alkoxygruppen sind z.B. Methoxy, Ethoxy, Propoxy und Butoxy; geeignete Acyloxygruppen umfassen Acetyloxy, Propionyloxy und Butyroxy.

In Formel I steht X vorzugsweise für ein Halogen, insbesondere für Chlor. n steht bevorzugt für 1 oder 2, insbesondere für 1.

Bei der Verbindung der Formel I handelt es sich besonders bevorzugt um 3-Chlorcyclopenten. Diese Verbindung ist an sich bekannt und kann durch Umsetzung von Cyclopentadien mit Chlorwasserstoff hergestellt werden, vgl. Moffett, Org. Synth. Col.IV, 1969, 238.

Als Lewis-Säure kommen kovalente Metallhalogenide und Halbmetallhalogenide, die eine Elektronenpaarlücke aufweisen, in Betracht. Derartige Verbindungen sind dem Fachmann bekannt, beispielsweise aus J.P. Kennedy et al. in US 4,946,889, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. Sie sind in der Regel ausgewählt unter Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumdichloride und die Dialkylaluminiumchloride. Bevorzugte Lewis-Säuren sind Titantetrachlorid, Bortrichlorid, Bortrifluorid, Zinntetrachlorid, Aluminiumtrichlorid, Vanadiumpentachlorid, Eisentrichlorid, Alkylaluminiumdichloride und Dialkylaluminiumchloride. Besonders bevorzugte Lewis-Säuren sind Titantetrachlorid, Bortrichlorid und Bortrifluorid und insbesondere Titantetrachlorid.

Es hat sich bewährt, die Polymerisation in Gegenwart eines Elektronendonors durchzuführen. Als Elektronendonoren kommen aprotische organische Verbindungen in Betracht, die ein an einem Stickstoff, Sauerstoff oder Schwefelatom befindliches, freies Elektronenpaar aufweisen. Bevorzugte Donorverbindungen sind ausgewählt unter Pyridinen wie Pyridin selbst, 2,6-Dimethylpyridin, sowie sterisch gehinderten Pyridinen wie 2,6-Diisopropylpyridin und 2,6-Di-tert-butylpyridin; Amiden, insbesondere N,N-Dialkylamiden von aliphatischen oder aromatischen Carbonsäuren wie N,N-Dimethylacetamid; Lactamen, insbesondere N-Alkyllactamen wie N-Methylpyrrolidon; Ethern, z.B. Dialkylethern wie Diethylether und Diisopropylether, cyclischen Ethern, wie Tetrahydrofuran; Aminen, insbesondere Trialkylaminen wie Triethylamin; Estern, insbesondere C₁-C₄-Alkylestern aliphatischer C₁-C₆-Carbonsäuren wie Ethylacetat; Thioethern, insbesondere Dialkylthioethern oder Alkylarylthioethern, wie Methylphenylsulfid; Sulfoxiden, insbesondere Dialkylsulfoxiden, wie Dimethylsulfoxid; Nitrilen, insbesondere Alkylnitrilen wie Acetonitril und Propionitril; Phosphinen, insbesondere Trialkylphosphinen oder Triarylphosphinen, wie Trimethylphosphin, Triethylphosphin, Tri-n-butylphosphin und Triphenylphosphin und nicht polymerisierbaren, aprotischen siliziumorganischen Verbindungen, die wenigstens einen über Sauerstoff gebundenen organischen Rest aufweisen.

Unter den vorgenannten Donoren sind Pyridin und sterisch gehinderte Pyridin-Derivate sowie insbesondere siliziumorganische Verbindungen bevorzugt.

Bevorzugte derartige siliziumorganische Verbindungen sind solche der allgemeinen Formel III:

R^{a}ₙSi(OR^{b})₄₋ₙ (III)

worin n für 1, 2 oder 3 steht,
- R^{a}: gleich oder verschieden sein können und unabhängig voneinander C₁-C₂₀-Alkyl, C₅-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
- R^{b}: gleich oder verschieden sind und C₁-C₂₀-Alkyl bedeuten oder für den Fall, dass n für 1 oder 2 steht, zwei Reste R^{b} gemeinsam für Alkylen stehen können.

In der Formel III steht n vorzugsweise für 1 oder 2. R^{a} bedeutet vorzugsweise eine C₁-C₈-Alkylgruppe, und insbesondere eine verzweigte oder über ein sekundäres C-Atom gebundene Alkylgruppe, wie Isopropyl, Isobutyl, 2-Butyl, oder eine 5-, 6- oder 7-gliedrige Cycloalkylgruppe, oder eine Arylgruppe. Die Variable R^{b} steht vorzugsweise für eine C₁-C₄-Alkylgruppe oder für einen Phenyl-, Tolyl- oder Benzylrest.

Beispiele für derartige bevorzugte Verbindungen sind Dimethoxydiisopropylsilan, Dimethoxyisobutylisopropylsilan, Dimethoxydi-isobutylsilan, Dimethoxydicyclopentylsilan, Dimethoxyisobutyl-2-butylsilan, Diethoxyisobutylisopropylsilan, Triethoxytoluylsilan, Triethoxybenzylsilan und Triethoxyphenylsilan.

Die Lewis-Säure wird in einer Menge eingesetzt, die zur Bildung des Initiatorkomplexes ausreicht. Das Molverhältnis von Lewis-Säure zu Initiator beträgt im Allgemeinen 10:1 bis 1:10, insbesondere 1:1 bis 1:4 und speziell 1:1,5 bis 1:4.

Als Isobuten-Einsatzstoffe für das erfindungsgemäße Verfahren eignen sich sowohl Isobuten selbst als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalyzed Cracking), sofern sie weitgehend von darin enthaltenem 1,3-Butadien befreit sind. Erfindungsgemäß geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

Es können auch Monomermischungen des Isobutens mit olefinisch ungesättigten Monomeren, welche mit Isobuten unter kationischen Polymerisationsbedingungen copolymerisierbar sind, umgesetzt werden. Das erfindungsgemäße Verfahren ist außerdem zur Blockcopolymerisation von Isobuten mit unter kationischen Polymerisationsbedingungen polymerisierbaren ethylenisch ungesättigten Comonomeren geeignet. Sofern Monomermischungen des Isobutens mit geeigneten Comonomeren polymerisiert werden sollen, enthält die Monomermischung vorzugsweise mehr als 80 Gew.-%, insbesondere mehr als 90 Gew.-%, und, besonders bevorzugt, mehr als 95 Gew.-% Isobuten, und weniger als 20 Gew.-%, vorzugsweise weniger als 10 Gew.-%, und insbesondere weniger als 5 Gew.-%, Comonomere.

Als copolymerisierbare Monomere kommen Vinylaromaten wie Styrol und α-Methylstyrol, C₁-C₄-Alkylstyrole wie 2-, 3- und 4-Methylstyrol, sowie 4-tert.-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)si-lyl]ethen, 1-[Tri(methoxyethoxy)silyl]propen, und 1-[Tri(meth-oxyethoxy)silyl]-2-methylpropen-2.

Die Polymerisation wird üblicherweise in einem Lösungsmittel durchgeführt. Als Lösungsmittel kommen alle niedermolekularen, organischen Verbindungen oder deren Gemische in Betracht, die eine geeignete Dielektrizitätskonstante und keine abstrahierbaren Protonen aufweisen und die unter den Polymerisationsbedingungen flüssig sind. Bevorzugte Lösungsmittel sind Kohlenwasserstoffe, z.B. acyclische Kohlenwasserstoffe mit 2 bis 8 und vorzugsweise 3 bis 8 Kohlenstoffatomen wie Ethan, Iso- und n-Propan, n-Butan und seine Isomeren, n-Pentan und seine Isomeren, n-Hexan und seine Isomeren, sowie n-Heptan und seine Isomeren, sowie n-Octan und seine Isomeren, cyclische Alkane mit 5 bis 8 Kohlenstoffatomen wie Cyclopentan, Methylcyclopentan, Cyclohexan, Methylcyclohexan, Cycloheptan, acyclische Alkene mit vorzugsweise 2 bis 8 Kohlenstoffatomen wie Ethen, Iso- und n-Propen, n-Buten, n-Penten, n-Hexen und n-Hepten, cyclische Olefine wie Cyclopenten, Cyclohexen und Cyclohepten, aromatische Kohlenwasserstoffe wie Toluol, Xylol, Ethylbenzol, sowie halogenierte Kohlenwasserstoffe, wie halogenierte aliphatische Kohlenwasserstoffe, z.B. wie Chlormethan, Dichlormethan, Trichlormethan, Chlorethan, 1,2-Dichlorethan und 1,1,1-Trichlorethan und 1-Chlorbutan, sowie halogenierte aromatische Kohlenwasserstoffe wie Chlorbenzol und Fluorbenzol. Die als Lösungsmittel verwendeten halogenierten Kohlenwasserstoffe umfassen keine Verbindungen, worin Halogenatome an sekundären oder tertiären Kohlenstoffatomen sitzen.

Besonders bevorzugte Lösungsmittel sind aromatische Kohlenwasserstoffe, wovon Toluol besonders bevorzugt ist. Ebenfalls bevorzugt sind Lösungsmittelgemische, die wenigstens einen halogenierten Kohlenwasserstoff und wenigstens einen aliphatischen oder aromatischen Kohlenwasserstoff umfassen. Insbesondere umfasst das Lösungsmittelgemisch Hexan und Chlormethan und/oder Dichlormethan. Das Volumenverhältnis von Kohlenwasserstoff zu halogeniertem Kohlenwasserstoff liegt dabei vorzugsweise im Bereich von 1:10 bis 10:1, besonders bevorzugt im Bereich von 4:1 bis 1:4 und insbesondere im Bereich von 2:1 bis 1:2.

In der Regel wird man das erfindungsgemäße Verfahren bei Temperaturen unterhalb 0°C, z.B. im Bereich von 0 bis -140°C, vorzugsweise im Bereich von -30 bis -120°C, und besonders bevorzugt im Bereich von -40 bis -110°C durchführen. Der Reaktionsdruck ist von untergeordneter Bedeutung.

Die Abführung der Reaktionswärme erfolgt in üblicher Weise, beispielsweise durch durch Wandkühlung und/oder unter Ausnutzung einer Siedekühlung. Hier hat sich insbesondere die Verwendung von Ethen und/oder Mischungen von Ethen mit den oben als bevorzugt genannten Lösungsmitteln bewährt.

Zur Herstellung von Blockcopolymeren kann das distale Kettenende, d.h. das vom Initiator abgewandte Ende des erhaltenen IsobutenPolymers, mit Comonomeren, wie den oben aufgeführten, z.B. Vinylaromaten umgesetzt werden. So kann man z.B. zuerst Isobuten homopolymerisieren und anschließend das Comonomer zusetzen. Das dabei neu entstehende Comonomer-stämmige reaktive Kettenende wird entweder desaktiviert oder nach einer der nachstehend beschriebenen Ausführungsformen unter Ausbildung einer funktionellen Endgruppe terminiert oder zur Bildung höherer Blockcopolymere erneut mit Isobuten umgesetzt.

Zum Reaktionsabbruch werden die lebenden Kettenenden desaktiviert, beispielsweise durch Zugabe einer protischen Verbindung, insbesondere durch Zugabe von Wasser, Alkoholen wie Methanol, Ethanol, n-Propanol, Isopropanol, n-Butanol, Isobutanol, sec.-Butanol oder tert.-Butanol, oder deren Mischungen mit Wasser.

Um difunktionelle (telechele) Isobutenpolymere zu erhalten, terminiert man das distale Kettenende unter Ausbildung einer ethylenisch ungesättigten Gruppe, wobei man z.B. das reaktive Kettenende mit einem Terminierungsreagenz umsetzt, das an das Kettenende eine ethylenisch ungesättigte Gruppe anfügt, oder geeignet behandelt, um das reaktive Kettenende in eine solche Gruppe umzuwandeln.

In einer Ausführungsform wird das Kettenende durch Zugabe einer Trialkylallylsilanverbindung, z.B. Trimethylallylsilan, terminiert. Die Verwendung der Allylsilane führt zum Abbruch der Polymerisation unter Einführung eines Allylrestes am Polymerkettenende, vgl. EP 264 214.

In einer weiteren Ausführungsform wird das reaktive Kettenende thermisch, beispielsweise durch Erwärmen auf eine Temperatur von 70 bis 200°C, oder durch Behandlung mit einer Base in eine Methyliden-Doppelbindung überführt. Geeignete Basen sind z.B. Alkalimetallalkoxide, wie Natriummethanolat, Natriumethanolat und Kalium-tert-Butanolat, basisches Aluminiumoxid, Alkalimetallhydroxide, wie Natriumhydroxid, und tertiäre Amine, wie Pyridin oder Tributylamin, vgl. Kennedy et al., Polymer Bulletin 1985, 13, 435-439. Bevorzugt wird Natriumethanolat verwendet.

In einer weiteren Ausführungsform wird das reaktive Kettenende mit einem konjugierten Dien, wie Butadien, umgesetzt, vgl. DE-A 40 25 961.

In einer weiteren Ausführungsform werden durch Zusatz eines Kopplungsmittels zwei oder mehrere lebende Polymerketten gekoppelt. "Kopplung" bedeutet die Ausbildung von chemischen Bindungen zwischen den reaktiven Kettenenden, so dass zwei oder mehrere Polymerketten zu einem Molekül verbunden werden. Die durch Kopplung erhaltenen Moleküle sind symmetrische telechele oder sternförmige Moleküle mit Cycloalkenylgruppen an den Molekülenden bzw. den Enden der Äste des sternförmigen Moleküls. Auf diese Weise lassen sich auch durch Kopplung von lebenden Copolymeren des Typs AB⁺ Triblockcopolymere des Typs AB-BA herstellen, worin A für einen Polyisobutenblock und B für einen davon verschiedenen Polymerblock, z.B. einen Polyvinylaromatenblock, steht.

Geeignete Kopplungsmittel weisen beispielsweise wenigstens zwei allylständig zur gleichen oder verschiedenen Doppelbindungen angeordnete elektrofuge Austrittsgruppen, z.B. Trialkylsilylgruppen, auf, so dass sich das kationische Zentrum eines reaktiven Kettenendes in einer konzertierten Reaktion unter Abspaltung der Austrittsgruppe und Verschiebung der Doppelbindung anlagern kann. Andere Kopplungsmittel weisen wenigstens ein konjugiertes System auf, an das sich das kationische Zentrum eines reaktiven Kettenendes unter Ausbildung eines stabilisierten Kations elektrophil addieren kann. Durch Abspaltung einer Austrittsgruppe, z.B. eines Protons, entsteht dann unter Rückbildung des konjugierten Systems eine stabile o-Bindung zu der Polymerkette. Mehrere dieser konjugierten Systeme können durch inerte Spacer miteinander verbunden sein.

Zu den geeigneten Kopplungsmitteln zählen:
(i) Verbindungen, die wenigstens zwei 5-gliedrige Heterocyclen mit einem unter Sauerstoff, Schwefel und Stickstoff ausgewählten Heteroatom aufweisen, z.B. organische Verbindungen, die wenigstens zwei Furanringe aufweisen, wie 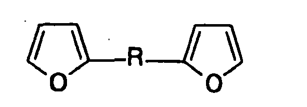 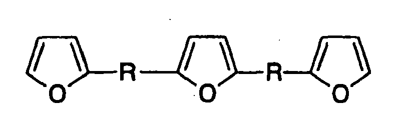 worin R für C₁-C₁₀-Alkylen steht, vorzugsweise Methylen oder 2,2-Propandiyl;
(ii) Verbindungen mit wenigstens zwei allylständigen Trialkylsilylgruppen, wie 1,1-Bis(trialkylsilylmethyl)ethylene, z.B. 1,1-Bis(trimethylsilylmethyl)ethylen,
   Bis[(trialkylsilyl)-propenyl]benzole z.B. 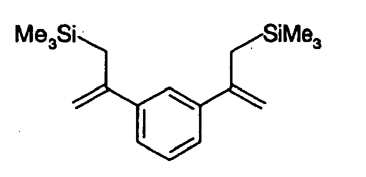 (worin Me für Methyl steht),
(iii) Verbindungen mit wenigstens zwei konjugiert zu jeweils zwei aromatischen Ringen angeordneten Vinylidengruppen, wie Bis-diphenylethylene z.B.

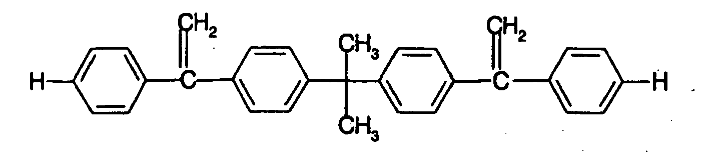

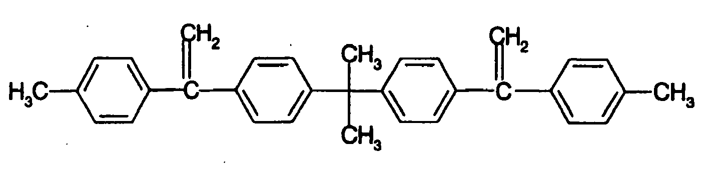

Eine Beschreibung geeigneter Kopplungsmittel findet sich in folgenden Literaturstellen; die Kopplungsreaktion kann in analoger Weise zu den dort beschriebenen Umsetzungen durchgeführt werden: R. Faust, S. Hadjikyriacou, Macromolecules 2000, 33, 730-733; R. Faust, S. Hadjikyriacou, Macromolecules 1999, 32, 6393-6399; R. Faust, S. Hadjikyriacou, Polym. Bull. 1999, 43, 121-128; R. Faust, Y. Bae, Macromolecules 1997, 30, 198; R. Faust, Y. Bae, Macromolecules 1998, 31, 2480; R. Storey, Maggio, Polymer Preprints 1998, 39, 327-328; WO99/24480; US 5,690,861 und US 5,981,785.

Die Kopplung erfolgt in der Regel in Gegenwart einer Lewis-Säure, wobei sich solche Lewis-Säuren eignen, die auch zur Durchführung der eigentlichen Polymerisationsreaktion verwendbar sind. Zur Durchführung der Kopplungsreaktion sind außerdem auch die gleichen Lösungsmittel und Temperaturen geeignet, wie man sie zur Durchführung der eigentlichen Polymerisationsreaktion einsetzt. Zweckmäßigerweise kann man die Kopplung daher als Eintopfreaktion im Anschluß an die Polymerisationsreaktion im gleichen Lösungsmittel in Gegenwart der zur Polymerisation eingesetzten Lewis-Säure durchführen. Üblicherweise verwendet man eine molare Menge des Kopplungsmittels, die etwa dem Quotienten der zur Polymerisation verwendeten molaren Menge des Initiators der Formel I, dividiert durch die Zahl der Kopplungsstellen des Kopplungsmittels, entspricht.

Nach der Terminierung oder Kopplung wird in der Regel das Lösungsmittel in geeigneten Aggregaten wie Rotations-, Fallfilm- oder Dünnschichtverdampfern oder durch Entspannung der Reaktionslösung entfernt.

Die nach dem erfindungsgemäßen Verfahren hergestellten Isobuten-Polymere weisen eine enge Molekulargewichtsverteilung auf. Der Polydispersitätsindex PDI = M_{w}/Mₙ liegt dabei vorzugsweise unterhalb von 1,40, besonders bevorzugt unterhalb von 1,35.

Die erfindungsgemäß hergestellten Isobuten-Polymere sind an einem Kettenende durch den Cycloalkenring des Initiators der Formel I terminiert. Bei der entgegengesetzten Endgruppe handelt es sich vorzugsweise um eine ethylenisch ungesättigte Gruppe, die wie oben beschrieben thermisch oder durch Umsetzung des reaktiven Kettenendes mit einer geeigneten Base, einer Trialkylallylsilanverbindung oder einem konjugierten Dien erhältlich ist.

Ein weiterer Gegenstand der vorliegenden Erfindung ist ein Isobutenpolymer, das an wenigstens einem Molekülende durch eine Gruppe der Formel II terminiert ist, 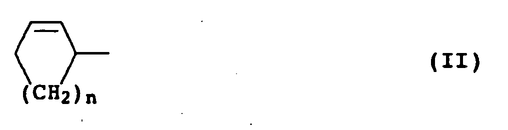 worin n für 1, 2 oder 3 steht oder ein Funktionalisierungsprodukt davon, das durch
i) Hydrosilylierung,
ii) Hydrosulforierung,
iii) elektrophile Substitution an Aromaten,
iv) Epoxidierung und ggf. Umsetzung mit Nucleophilen,
v) Hydroborierung und ggf. oxidative Spaltung,
vi) Umsetzung mit einem Enophil in einer En-Reaktion,
vii) Addition von Halogenen oder Halogenwasserstoffen oder
viii) Hydroformylierung
erhältlich ist.

Die beschriebenen Funktionalisierungsreaktionen können außer an der terminierenden Gruppe II auch an einer entgegengesetzten ungesättigten Endgruppe erfolgen. Aufgrund der unterschiedlichen Reaktivität der terminierenden Gruppe II und der entgegengesetzten ungesättigten Gruppe können diese auch unterschiedlich funktionalisiert werden.

### i) Hydrosilylierung

Zur Funktionalisierung kann ein gemäß dem erfindungsgemäßen Verfahren hergestelltes Polyisobuten einer Umsetzung mit einem Silan in Gegenwart eines Silylierungskatalysators unter Erhalt eines wenigstens teilweise mit Silylgruppen funktionalisierten Polyisobutens unterworfen werden.

Geeignete Hydrosilylierungskatalysatoren sind z.B. Übergangsmetailkatalysatoren, wobei das Übergangsmetall vorzugsweise ausgewählt ist unter Pt, Pd, Rh, Ru und Ir. Zu den geeigneten Platinkatalysatoren zählt beispielsweise Platin in feinverteilter Form ("Platinmohr"), Platinchlorid und Platinkomplexe wie Hexachloroplatinsäure oder Divinyldisiloxan-Platin-Komplexe, z.B. Tetramethyldivinyldisiloxan-Platin-Komplexe. Geeignete Rhodiumkatalysatoren sind beispielsweise (RhCl(P(C₆H₅)₃)₃) und RhCl₃. Geeignet sind weiterhin RuCl₃ und IrCl₃. Geeignete Katalysatoren sind weiterhin Lewis-Säuren wie AlCl₃ oder TiCl₄ sowie Peroxide. Dabei kann es von Vorteil sein, Kombinationen oder Gemische der zuvor genannten Katalysatoren einzusetzen.

Geeignete Silane sind z.B. halogenierte Silane, wie Trichlorsilan, Methyldichlorsilan, Dimethylchlorsilan und Trimethylsiloxydichlorsilan; Alkoxysilane, wie Trimethoxysilan, Triethoxysilan, Methyldimethoxysilan, Phenyldimethoxysilan, 1,3,3,5,5,7,7-Heptamethyl-1,1-dimethoxytetrasiloxan sowie Acyloxysilane.

Die Reaktionstemperatur bei der Silylierung liegt vorzugsweise in einem Bereich von 0 bis 140°C, besonders bevorzugt 40 bis 120°C. Die Reaktion wird üblicherweise unter Normaldruck durchgeführt, kann jedoch auch bei erhöhten Drücken, wie z.B. im Bereich von etwa 1,5 bis 20 bar, oder verringerten Drücken, wie z.B. 200 bis 600 mbar, erfolgen.

Die Reaktion kann ohne Lösungsmittel oder in Gegenwart eines geeigneten Lösungsmittels erfolgen. Als Lösungsmittel bevorzugt sind beispielsweise Toluol, Tetrahydrofuran und Chloroform.

### ii) Hydrosulfurierung

Zur Funktionalisierung kann ein gemäß dem erfindungsgemäßen Verfahren hergestelltes Polyisobuten einer Umsetzung mit Schwefelwasserstoff oder einem Thiol, wie Alkyl- oder Arylthiole, Hydroxymercaptane, Aminomercaptane, Thiocarbonsäuren oder Silanthiole, unter Erhalt eines wenigstens teilweise mit Thiogruppen funktionalisierten Polyisobutens unterzogen werden. Geeignete Hydro-Alkylthio-Additionen sind in J. March, Advanced Organic Chemistry, 4. Auflage, Verlag John Wiley & Sons, S. 766-767 beschrieben, worauf hier in vollem Umfang Bezug genommen wird. Die Umsetzung kann in der Regel sowohl in Abwesenheit als auch in Anwesenheit von Initiatoren sowie in Anwesenheit von elektromagnetischer Strahlung erfolgen. Bei der Addition von Schwefelwasserstoff werden mit Thiolgruppen funktionalisierte Polyisobutene erhalten. Die Addition von Schwefelwasserstoff erfolgt bevorzugt bei Temperaturen unterhalb von 100°C und einem Druck von 1 bis 50 bar, besonders bevorzugt von etwa 10 bar. Außerdem erfolgt die Addition vorzugsweise in Gegenwart eines Kationenaustauscherharzes, wie Amberlyst 15. Bei der Umsetzung mit Thiolen in Abwesenheit von Initiatoren werden in der Regel die Markovnikov-Additionsprodukte an die Doppelbindung erhalten. Geeignete Initiatoren der Hydro-Alkylthio-Addition sind beispielsweise Protonen- und Lewis-Säuren, wie konzentrierte Schwefelsäure oder AlCl₃, und saure Kationenaustauscher, wie Amberlyst 15. Geeignete Initiatoren sind weiterhin solche, die zur Ausbildung von freien Radikalen befähigt sind, wie Peroxide oder Azoverbindungen. Bei der Hydro-Alkylthio-Addition in Gegenwart dieser Initiatoren werden in der Regel die Anti-Markovnikov-Additionsprodukte erhalten. Die Reaktion kann weiterhin in Gegenwart von elektromagnetischer Strahlung einer Wellenlänge von 400 bis 10 nm, bevorzugt 200 bis 300 nm, erfolgen.

### iii) Elektrophile Substitution an Aromaten

Zur Derivatisierung kann ein gemäß dem erfindungsgemäßen Verfahren hergestelltes Polyisobuten mit einer Verbindung, die wenigstens eine aromatische oder heteroaromatische Gruppe aufweist, in Gegenwart eines Alkylierungskatalysators umgesetzt werden. Geeignete aromatische und heteroaromatische Verbindungen, Katalysatoren und Reaktionsbedingungen dieser sogenannten Friedel-Crafts-Alkylierung sind beispielsweise in J. March, Advanced Organic Chemistry, 4. Auflage, Verlag John Wiley & Sons, S. 534-539 beschrieben, worauf hier Bezug genommen wird.

Vorzugsweise wird zur Alkylierung eine aktivierte aromatische Verbindung eingesetzt. Geeignete aromatische Verbindungen sind beispielsweise Alkylaromaten, Alkoxyaromaten, Hydroxyaromaten- oder aktivierte Heteroaromaten, wie Thiophene oder Furane.

Die zur Alkylierung eingesetzte aromatische Hydroxyverbindung ist vorzugsweise ausgewählt unter phenolischen Verbindungen mit 1, 2 oder 3 OH-Gruppen, die gegebenenfalls wenigstens einen weiteren Substituenten aufweisen können. Bevorzugte weitere Substituenten sind C₁-C₈-Alkylgruppen und insbesondere Methyl und Ethyl. Bevorzugt sind insbesondere Verbindungen der allgemeinen Formel, 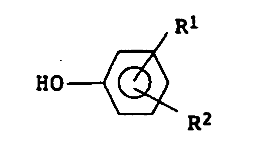 worin R¹ und R² unabhängig voneinander für Wasserstoff, OH oder CH₃ stehen. Besonders bevorzugt sind Phenol, die Kresol-Isomere, Katechol, Resorcinol, Pyrogallol, Fluoroglucinol und die Xylenol-Isomere. Insbesondere werden Phenol, o-Kresol und p-Kresol eingesetzt. Gewünschtenfalls können auch Gemische der zuvor genannten Verbindungen zur Alkylierung eingesetzt werden.

Geeignet sind auch Polyaromaten, wie Polystyrol, Polyphenylenoxid oder Polyphenylensulfid, oder Copolymere von Aromaten beispielsweise mit Butadien, Isopren, (meth)Acrylsäurederivaten, Ethylen oder Propylen.

Der Katalysator ist vorzugsweise ausgewählt unter Lewis-sauren Alkylierungskatalysatoren, worunter im Rahmen der vorliegenden Anmeldung sowohl einzelne Akzeptoratome als auch Akzeptor-Ligand-Komplexe, Moleküle, etc. verstanden werden, sofern diese insgesamt (nach außen) Lewis-saure (Elektronenakzeptor-)Eigenschaften aufweisen. Dazu zählen beispielsweise AlCl₃, AlBr₃, BF₃, BF₃-2 C₆H₅OH, BF₃[O(C₂H₅)₂]₂, TiCl₄, SnCl₄, AlC₂H₅Cl₂, FeCl₃, SbCl₅ und SbF₅. Diese Alkylierungskatalysatoren können gemeinsam mit einem Cokatalysator, beispielsweise einem Ether, eingesetzt werden. Geeignete Ether sind Di-(C₁-C₈-)alkylether, wie Dimethylether, Diethylether, Di-n-propylether, sowie Tetrahydrofuran, Di-(C₅-C₈-)cycloalkylether, wie Dicyclohexylether und Ether mit mindestens einem aromatischen Kohlenwasserstoffrest, wie Anisol. Wird zur Friedel-Crafts-Alkylierung ein Katalysator-Cokatalysator-Komplex eingesetzt, so liegt das Molmengenverhältnis von Katalysator zu Cokatalysator vorzugsweise in einem Bereich von 1:10 bis 10:1. Die Reaktion kann auch mit Protonensäuren wie Schwefelsäure, Phosphorsäure, Trifluormethansulfonsäure katalysiert werden. Organische Protonensäuren können auch in polymer gebundener Form vorliegen, beispielsweise als Ionenaustauscherharz. Geeignet sind auch Zeolithe sowie anorganische Polysäuren.

Die Alkylierung kann lösungsmittelfrei oder in einem Lösungsmittel durchgeführt werden. Geeignete Lösungsmittel sind beispielsweise n-Alkane und deren Gemische und Alkylaromaten, wie Toluol, Ethylbenzol und Xylol sowie halogenierte Abkömmlinge davon.

Die Alkylierung wird bevorzugt bei Temperaturen zwischen -10°C und +100°C durchgeführt. Die Reaktion wird üblicherweise bei Atmosphärendruck durchgeführt, kann aber auch bei höheren oder geringeren Drücken durchgeführt werden.

Durch geeignete Wahl der Molmengenverhältnisse von aromatischer oder heteroaromatischer Verbindung zu Polyisobuten und des Katalysators kann der erzielte Anteil an alkylierten Produkten und deren Alkylierungsgrad eingestellt werden. Im Wesentlichen monoalkylierte Polyisobutenylphenole werden im Allgemeinen mit einem Überschuss an Phenol oder in Gegenwart eines Lewis-sauren Alkylierungskatalysators erhalten, wenn zusätzlich ein Ether als Cokatalysator eingesetzt wird.

Zur weiteren Funktionalisierung kann man das erhaltene Polyisobutenylphenol einer Umsetzung im Sinne einer Mannichreaktion mit wenigstens einem Aldehyd, beispielsweise Formaldehyd, und wenigstens einem Amin, das wenigstens eine primäre oder sekundäre Aminfunktion aufweist, unterziehen, wobei man eine mit Polyisobuten alkylierte und zusätzlich wenigstens teilweise aminoalkylierte Verbindung erhält. Es können auch Reaktions- und/oder Kondensationsprodukte von Aldehyd und/oder Amin eingesetzt werden. Die Herstellung solcher Verbindungen sind in WO 01/25 293 und WO 01/25 294 beschrieben, auf die hiermit im vollen Umfang Bezug genommen wird.

### iv) Epoxidierung

Zur Funktionalisierung kann ein gemäß dem erfindungsgemäßen Verfahren hergestelltes Polyisobuten mit wenigstens einer Peroxidverbindung unter Erhalt eines wenigstens teilweise epoxidierten Polyisobutens umgesetzt werden. Geeignete Verfahren zur Epoxidierung sind in J. March, Advanced Organic Chemistry, 4. Auflage, Verlag John Wiley & Sons, S. 826-829 beschrieben, worauf hier Bezug genommen wird. Vorzugsweise wird als Peroxidverbindung wenigstens eine Persäure, wie m-Chlorperbenzoesäure, Perameisensäure, Peressigsäure, Trifluorperessigsäure, Perbenzoesäure und 3,5-Dinitroperbenzoesäure eingesetzt. Die Herstellung der Persäuren kann in situ aus den entsprechenden Säuren und H₂O₂ gegebenenfalls in Gegenwart von Mineralsäuren erfolgen. Weitere geeignete Epoxidierungsreagenzien sind beispielsweise alkalisches Wasserstoffperoxid, molekularer Sauerstoff und Alkylperoxide, wie tert.-Butylhydroperoxid. Geeignete Lösungsmittel für die Epoxidierung sind beispielsweise übliche, nicht polare Lösungsmittel. Besonders geeignete Lösungsmittel sind Kohlenwasserstoffe wie Toluol, Xylol, Hexan oder Heptan. Das gebildete Epoxid kann anschließend ringöffnend mit Wasser, Säuren, Alkoholen, Thiolen oder primären oder sekundären Aminen umgesetzt werden, wobei man u.a. Diole, Glycolether, Glycolthioether und Amine erhält.

### v) Hydroborierung

Zur Funktionalisierung kann man ein gemäß dem erfindungsgemäßen Verfahren hergestelltes Polyisobuten einer Umsetzung mit einem (gegebenenfalls in situ erzeugten) Boran unterziehen, wobei ein wenigstens teilweise hydroxyliertes Polyisobuten erhalten wird. Geeignete Verfahren zur Hydroborierung sind in J. March, Advanced Organic Chemistry, 4. Auflage, Verlag John Wiley & Sons, S. 783-789 beschrieben, worauf hiermit Bezug genommen wird. Geeignete Hydroborierungsreagenzien sind beispielsweise Diboran, das in der Regel in situ durch Umsetzung von Natriumborhydrid mit BF₃₋Etherat erzeugt wird, Diisamylboran (Bis-[3-methylbut-2-yl]boran), 1,1,2-Trimethylpropylboran, 9-Borbicyclo[3.3.1]nonan, Diisocamphenylboran, die durch Hydroborierung der entsprechenden Alkene mit Diboran erhältlich sind, Chlorboran-Dimethylsulfid, Alkyldichlorborane oder H₃B-N(C₂H₅)₂.

Üblicherweise führt man die Hydroborierung in einem Lösungsmittel durch. Geeignete Lösungsmittel für die Hydroborierung sind beispielsweise acyclische Ether wie Diethylether, Methyl-tert.-butylether, Dimethoxyethan, Diethylenglykoldimethylether, Triethylenglykoldimethylether, cyclische Ether wie Tetrahydrofuran oder Dioxan sowie Kohlenwasserstoffe wie Hexan oder Toluol oder Gemische davon. Die Reaktionstemperatur wird in der Regel von der Reaktivität des Hydroborierungsmittels bestimmt und liegt normalerweise zwischen dem Schmelz- und Siedepunkt des Reaktionsgemisches, vorzugsweise im Bereich von 0°C bis 60°C.

Üblicherweise setzt man das Hydroborierungsmittel im Überschuss bezogen auf das Alken ein. Das Boratom addiert sich vorzugsweise an das weniger substituierte und somit sterisch weniger gehinderte Kohlenstoffatom.

Üblicherweise werden die gebildeten Alkylborane nicht isoliert, sondern durch nachfolgende Umsetzung direkt in die Wertprodukte überführt. Eine sehr bedeutsame Umsetzung der Alkylborane ist die Reaktion mit alkalischen Wasserstoffperoxid unter Erhalt eines Alkohols, der vorzugsweise formal der Anti-Markovnikov-Hydratisierung des Alkens entspricht. Des Weiteren können die erhaltenen Alkylborane einer Umsetzung mit Brom in Gegenwart von Hydroxid-Ionen unter Erhalt des Bromids unterzogen werden.

### vi) En-Reaktion

Zur Funktionalisierung kann ein gemäß dem erfindungsgemäßen Verfahren hergestelltes Polyisobuten mit wenigstens einem Alken, das eine elektrophil-substituierte Doppelbindung aufweist, in einer En-Reaktion umgesetzt werden (siehe z.B. DE-A 4 319 672 oder H. Mach und P. Rath in "Lubrication Science II (1999), S. 175-185, worauf vollinhaltlich Bezug genommen wird). Bei der En-Reaktion wird ein als En bezeichnetes Alken mit einem Allyl-ständigen Wasserstoffatom mit einem elektrophilen Alken, dem sogenannten Enophil, in einer pericyclischen Reaktion, umfassend eine Kohlenstoff-Kohlenstoff-Bindungsknüpfung, eine Doppelbindungsverschiebung und einen Wasserstofftransfer umgesetzt. Vorliegend reagiert das Polyisobuten als En. Geeignete Enophile sind Verbindungen, wie sie auch als Dienophile in der Diels-Alder-Reaktion eingesetzt werden. Bevorzugt wird als Enophil Maleinsäureanhydrid eingesetzt. Dabei resultieren wenigstens teilweise mit Bernsteinsäureanhydridgruppen (Succinanhydridgruppen) funktionalisierte Polyisobutene.

Die En-Reaktion kann gegebenenfalls in Gegenwart einer Lewis-Säure als Katalysator durchgeführt werden. Geeignet sind beispielsweise Aluminiumchlorid und Ethylaluminiumchlorid.

Zur weiteren Funktionalisierung kann man beispielsweise ein mit Bernsteinsäureanhydridgruppen derivatisiertes Polyisobuten einer Folgereaktion unterziehen, die ausgewählt ist unter:
α) Umsetzung mit wenigstens einem Amin unter Erhalt eines wenigstens teilweise mit Succinimidgruppen und/oder Succinamidgruppen funktionalisierten Polyisobutens,
β) Umsetzung mit wenigstens einem Alkohol unter Erhalt eines wenigstens teilweise mit Succinestergruppen funktionalisierten Polyisobutens, und
γ) Umsetzung mit wenigstens einem Thiol unter Erhalt eines wenigstens teilweise mit Succinthioestergruppen funktionalisierten Polyisobutens.

### vii) Addition von Halogen oder Halogenwasserstoffen

Zur Funktionalisierung kann ein gemäß dem erfindungsgemäßen Verfahren hergestelltes Polyisobuten einer Umsetzung mit Halogenwasserstoff oder einem Halogen unter Erhalt eines wenigstens teilweise mit Halogengruppen funktionalisierten Polyisobutens unterzogen werden. Geeignete Reaktionsbedingungen der Hydro-Halo-Addition werden in J. March, Advanced Organic Chemistry, 4. Auflage, Verlag John Wiley & Sons, S. 758-759 beschrieben, worauf hier Bezug genommen wird. Zur Addition von Halogenwasserstoff eignen sich prinzipiell HF, HCl, HBr und HI. Die Addition von HI, HBr und HF kann in der Regel bei Raumtemperatur erfolgen, wohingegen zur Addition von HCl in der Regel erhöhte Temperaturen eingesetzt werden.

Die Addition von Halogenwasserstoffen kann prinzipiell in Abwesenheit oder in Anwesenheit von Initiatoren oder von elektromagnetischer Strahlung erfolgen. Bei der Addition in Abwesenheit von Initiatoren, speziell von Peroxiden, werden in der Regel die Markovnikov-Additionsprodukte erhalten. Unter Zusatz von Peroxiden führt die Addition von HBr in der Regel zu Anti-Markovnikov-Produkten.

Die Halogenierung von Doppelbindungen wird in J. March, Advanced Organic Chemistry, 4. Auflage, Verlag John Wiley & Sons, S. 812-814 beschrieben, worauf hier Bezug genommen wird. Zur Addition von Cl, Br und I können die freien Halogene eingesetzt werden. Zum Erhalt von gemischt-halogenierten Verbindungen ist der Einsatz von Interhalogen-Verbindungen bekannt. Zur Addition von Fluor werden in der Regel fluorhaltige Verbindungen, wie CoF₃, XeF₂ und Mischungen von PbO₂ und SF₄ eingesetzt. Brom addiert in der Regel bei Raumtemperatur in guten Ausbeuten an Doppelbindungen. Zur Addition von Chlor können neben dem freien Halogen auch chlorhaltige Reagenzien, wie SO₂Cl₂, PCl₅ etc. eingesetzt werden.

Wird zur Halogenierung Chlor oder Brom in Gegenwart von elektromagnetischer Strahlung eingesetzt, so erhält man im Wesentlichen die Produkte der radikalischen Substitution an der Polymerkette und nicht oder nur in untergeordnetem Maß Additionsprodukte an die endständige Doppelbindung.

Bestimmte durch das erfindungsgemäße Verfahren erhältliche Polyisobutene, die an einem Kettenende durch eine Gruppe der Formel II terminiert sind und am entgegengesetzten Kettenende eine davon verschiedene, zuvor beschriebene, terminierende Gruppe aufweisen, können aufgrund der unterschiedlichen Reaktivitäten der terminierenden Gruppen unterschiedlich funktionalisiert werden. Dies ist insbesondere für die Verwendung des Polyisobutens in Kraft- und Schmierstoffen von Vorteil, da hier hydrophile und hydrophobe Eigenschaften zusammentreffen müssen. Weiterhin ist die einfache Zugänglichkeit der Verbindung der Formel I von Vorteil. Da mit der Verbindung der Formel I nur eine einseitig wachsende Kette initiiert wird, verringert sich die benötigte Menge an Lewis-Säure und Terminierungsreagenz im Vergleich zu polyfunktionellen Initiatoren. Außerdem unterliegt die aus dem Initiator stammende terminierende Gruppe nicht den eingangs genannten Nebenreaktionen, die bei Verwendung von polyfunktionellen aromatischen Initiatoren des Standes der Technik auftreten.

Die folgenden Beispiele sollen die Erfindung näher veranschaulichen.

### Beispiele 1 bis 9: Polymerisation

Die verwendete Apparatur bestand aus einem 2 l-Vierhalskolben mit Rührer, Trockeneiskühlung und zwei kühlbaren 1 l-Tropftrichtern. Beide Tropftrichter enthielten eine Schüttung aus trockenem Molekularsieb 3 Å über Glaswolle. In einem Tropftrichter wurden 600 ml des jeweils in Tabelle 1 aufgeführten Lösungsmittelgemischs 20 min lang bei -78°C getrocknet. Das Lösungsmittelgemisch wurde in den Reaktionskolben, der auf -70°C vortemperiert war, gegeben. In den zweiten, gekühlten Tropftrichter wurde Isobuten einkondensiert, das man dann innerhalb von 25 min zu dem Lösungsmittelgemisch hinzufügte. Unter starkem Rühren fügte man bei -70°C über ein Septum nacheinander die jeweils in Tabelle 1 aufgeführten Mengen an Elektronendonor, 3-Chlorcyclopenten und Titantetrachlorid hinzu. Nach 2-stündigem Rühren bei -50 bis -70°C brach man die Polymerisation durch Zugabe von Ethanol oder Isopropanol ab (Beispiele 1, 7 und 9) oder setzte Allyltrimethylsilan zu, rührte weitere 30 min bei -50 bis -70°C und gab dann Ethanol oder Isopropanol zu (Beispiele 2 bis 6 und 8). Die Reaktionslösung wurde auf Raumtemperatur aufgetaut und 3 x mit Wasser gewaschen. Anschließend engte man die Lösung bei 180°C im Vakuum bis zur Trockene ein. Das zahlenmittlere und gewichtsmittlere Molekulargewicht wurden mittels Gelchromatographie ermittelt. Die daraus erhaltenen Werte sowie der Polydispersitätsindex (PDI) sind ebenfalls in Tabelle 1 aufgeführt. Die Anwesenheit der Cyclopentenyl-Endgruppe im polymeren Feststoff wurde anhand der ¹H-NMR-Spektren nachgewiesen (δ_{C_{P}}=5,55-5,75).

**Tabelle 1**

| Bsp. | IB [mol] | CH₂Cl₂ [ml] | Hexan [ml] | CH₃Cl [ml] | TiCl₄ [mmol] | Chlor-CP [mmol] | Donor [mmol] | | Allyl TMS [mmol] | T [°C] | M_{w} | Mₙ | PDI |
|---|---|---|---|---|---|---|---|---|---|---|---|---|---|
| 1 | 4,28 | 300 | 300 | - | 26,0 | 50,0 | Ph(EtO)₃Si | 6,00 | - | -50 | 5855 | 4722 | 1,24 |
| 2 | 4,28 | 300 | 300 | - | 26,0 | 50,0 | Ph(EtO)₃Si | 6,00 | 75,0, | -50 | 5774 | 4893 | 1,18 |
| 3 | 4,28 | 300 | 300 | - | 26,0 | 50,0 | Ph(EtO)₃Si | 6,00 | 75,0 | -70 | 6251 | 4846 | 1,29 |
| 4 | 4,28 | 300 | 300 | - | 13,0 | 50,0 | Ph(EtO)₃Si | 6,00 | 75,0 | -50 | 6251 | 4846 | 1,29 |
| 5 | 4,28 | 300 | 300 | - | 13,0 | 30,0 | Ph(EtO)₃Si | 6,00 | 75,0 | -50 | 9660 | 8050 | 1,20 |
| 6 | 4,28 | 300 | 300 | - | 13,0 | 20,0 | Ph(EtO)₃Si | 6,00 | 75,0 | -50 | 14836 | 11869 | 1,25 |
| 7 | 2,20 | - | 360 | 240 | 22,0 | 2,0 | Di-tert-butylpyridin | 2,10 | - | -50 | 68215 | 58303 | 1,17 |
| 8 | 4,28 | 300 | 300 | - | 13,0 | 50,0 | Pyridin | 6,00 | 75,0 | -50 | 6535 | 4877 | 1,34 |
| 9 | 3,11 | 300 | 300 | - | 8,0 | 174,0 | Pyridin | 1,90 | - | -70 | 1127 | 847 | 1,33 |

| | | | | | | | | | | | | | |
|---|---|---|---|---|---|---|---|---|---|---|---|---|---|
| IB = Isobuten | | | | | | | | | | | | | |
| Chlor-CP = 3-Chlorcyclopenten | | | | | | | | | | | | | |
| Allyl TMS = Allyltrimethylsilan | | | | | | | | | | | | | |

### Beispiele 10 bis 12: Hydrosilylierung

### Beispiel 10

67,8 g (0,08 mol) des in Beispiel 9 erhaltenen Polymeren wurden vorgelegt, mit 1 ml einer 0,1 M H₂PtCl₆ x 6H₂O-Lösung in Isopropanol versetzt und auf 120°C erwärmt. Zur Reaktionsmischung wurden langsam 22,1 g (0,19 mol) Dichlormethylsilan zugegeben und die Temperatur 8 h auf 120°C gehalten. Anschließend wurden bei Raumtemperatur 100 ml trockenes THF sowie 100 g einer 30%igen Natriummethanolat-Lösung in Methanol zugegeben und 12 h bei Raumtemperatur gerührt. Unlösliche Bestandteile wurden abfiltriert und Methanol und THF abdestilliert. Man erhielt ein Isobutenpolymer mit folgenden Endgruppen:

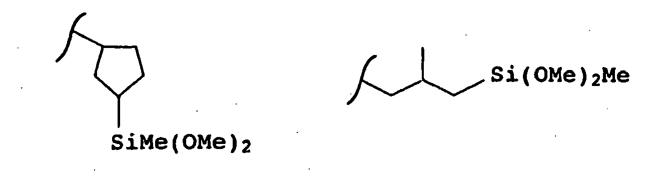

Das NMR-Spektrum zeigte die quantitative Hydrosilylierung des Cyclopentenyl-substituierten Kettenendes (vollständiges Verschwinden der olefinischen Ringprotonen). Die Funktionalisierung des Isopropenyl-substituierten Kettenendes betrug 80 %.

### Beispiel 11

59,3 g (0,07 mol) des in Beispiel 9 erhaltenen Polymeren wurden in trockenem THF gelöst und mit 1,0 ml 1,3-Divinyl-1,1,3,3-tetramethyldisiloxan-platin(0)-Komplex (0,1 M Lsg. in Poly(dimethylsiloxan)) versetzt. Anschließend wurden bei 60°C 19,6 g (0,17 mol) Dichlormethylsilan langsam zugegeben. Nach 3 h Erhitzen unter Rückfluß wurde das Reaktionsgemisch abgekühlt und mit 70 g einer 30%igen Natriummethanolat-Lösung in Methanol versetzt. Nach 12 h Rühren bei Raumtemperatur wurden unlösliche Bestandteile abfiltriert und Methanol und THF abdestilliert. Man erhielt ein Isobutenpolymer mit folgenden Endgruppen:

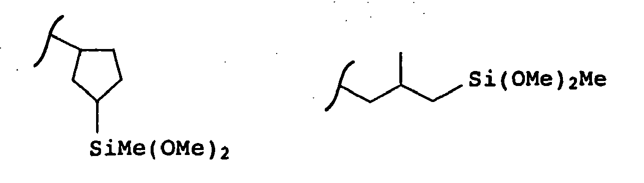

Das NMR-Spektrum zeigte die quantitative Hydrosilylierung des Cyclopentenyl-substituierten Kettenendes (vollständiges Verschwinden der olefinischen Ringprotonen). Die Funktionalisierung des Isopropenyl-substituierten Kettenendes betrug 20 %.

### Beispiel 12

20 g (4 mmol) Isobuten-Polymer aus Beispiel 2 wurden in 120 ml trockenem Toluol gelöst, mit 0,1 ml einer 0,1 M H₂PtCl₆ x 6H₂O-Lösung in Isopropanol versetzt und 1,15 g (10 mmol) Dichlormethylsilan zugegeben. Anschließend rührte man 12 h bei 90°C. Dann gab man bei Raumtemperatur 30 g einer 30%igen Natriummethanolat-Lösung in Methanol zu und rührte 12 h bei Raumtemperatur. Unlösliche Bestandteile wurden abfiltriert und das Lösungsmittel abdestilliert. Man erhielt ein Isobutenpolymer mit folgenden Endgruppen:

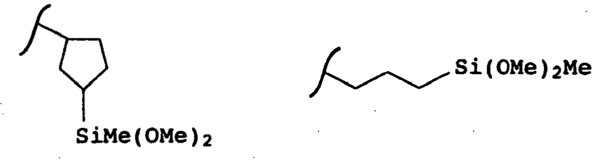

Das NMR-Spektrum zeigte die quantitative Funktionalisierung beider Kettenenden (vollständiges Verschwinden aller olefinischen Ringprotonen).

### Beispiele 13 und 14: Polymerisation und Kopplung

### Beispiel 13

300 ml Hexan, 300 ml Methylenchlorid und 4,28 mol Isobutylen wurden bei -78 °C vorgelegt und mit 6,0 mmol Phenyltriethoxysilan sowie 90 mmol 3-Chlorcyclopenten versetzt. Die Polymerisation wurde anschließend durch Zugabe von 80 mmol Titantetrachlorid gestartet. Nach 90-minütigem Rühren bei -78 °C wurde eine Lösung von 49 mmol 2,5-Bis(2-furylmethyl)furan in Hexan/Methylenchlorid zugegeben. Nach 2-stündigem Rühren bei -78 °C brach man die Reaktion durch Zusatz von Wasser ab, trennte die organische Phase ab und filtrierte sie über Kieselgel. Nach Entfernen des Lösungsmittel verblieb ein Polyisobutenpolymer mit Mn = 5500 (Mw/Mn = 1,4).

Anhand des ¹H-NMR-Spektrums konnte man eine quantitative Kopplung feststellen, wie durch das Fehlen der Signale der -CH₂C(CH₃)₂Cl-Gruppe bei 1,69 und 1,95 ppm (gegen TMS) bzw. der Signale der olefinischen Protonen des Polyisobuten-α- und -β-Olefins gezeigt wurde.

### Beispiel 14

300 ml Hexan, 300 ml Methylenchlorid und 4,28 mol Isobutylen wurden bei -78 °C vorgelegt und mit 6,0 mmol Phenyltriethoxysilan,6,1 mmol Di(tert-butyl)pyridin sowie 50 mmol 3-Chlorcyclopenten versetzt. Die Polymerisation wurde anschließend durch Zugabe von 26 mmol Titantetrachlorid gestartet. Nach 90-minütigem Rühren bei -78 °C wurde eine Lösung von 27 mmol 2,5-Bis-(2-furyl-2-propyl)furan in Hexan/Methylenchlorid zugegeben. Nach 2stündigem Rühren bei -78 °C brach man die Reaktion durch Zusatz von Wasser ab, trennte die organische Phase ab und filtrierte sie über Kieselgel. Nach Entfernen des Lösungsmittel verblieb ein Polyisobutenpolymer mit Mn = 8900 (Mw/Mn = 1,5).

Anhand des ¹H-NMR-Spektrums konnte man eine quantitative Kopplung feststellen, wie durch das Fehlen der Signale der -CH₂C(CH₃)₂Cl-Gruppe bei 1,69 und 1,95 ppm (gegen TMS) bzw. der Signale der olefinischen Protonen des Polyisobuten-α- und -β-Olefins gezeigt wurde.

### Beispiel 15 (Epoxidierung des Polyisobutens)

Im 0,5 l-Vierhalskolben wurde die Lösung von 100 g (0,02 mol) des Polyisobutens aus Beispiel 1 in 100 ml Toluol vorgelegt. Anschließend erfolgte die Zugabe von 1,8 g (0,04 mol) Ameisensäure. Man erwärmte auf 80 °C und tropfte 2,8 g (0,04 mol) H₂O₂-Lösung dazu. Es wurde 45 min bei 90 °C gerührt. Nach Abkühlung auf Raumtemperatur trennte man die wässrige Phase ab. Anschließend wurden 1 g (0,02 mol) Ameisensäure zur organischen Lösung gegeben, erneut auf 80 °C erhitzt und 1,4 g (0,02 mol) H₂O₂-Lösung zugetropft. Nach 1 h bei 90 °C wurde die wässrige Phase abgetrennt und die organische Phase mit 20 ml gesättigte NaHCO₃-Lösung, 20 ml Wasser und 20 ml gesättigte FeSO₄·7H₂O-Lösung gewaschen. Die organische Phase wurde bei 120 °C/4 mbar am Rotationsverdampfer eingeengt. Man erhielt 92 g α,ω-Diepoxypolyisobuten als helle, zähflüssige Masse.
¹H-NMR (in CD₂Cl₂, 16 Scans bei 500 MHz):
Die olefinischen Signale (5,7 ppm; 5,1 ppm; 4,8 und 4,6 ppm) waren verschwunden, neue Signale traten bei 2,6 ppm und 1,8 ppm auf, entsprechend 3,9 H-Atomen.

### Beispiel 16 (Umsetzung eines Polyisobutens mit Phenol nach Friedel-Crafts)

Im 1 l-Vierhalskolben wurde eine Lösung von 9,6 g (0,1 mol) Phenol in 10 ml Toluol vorgelegt, dann gab man 1,3 g (0,005 mol) BF₃-Phenolkomplex dazu. 100 g (0,02 mol) des Polyisobutens aus Beispiel 1 wurden in 200 ml Heptan gelöst und über 30 min zugetropft. Man rührte 12 h bei Raumtemperatur und brach die Reaktion durch Zugabe von 200 ml Methanol ab. Die Methanolphase wurde verworfen, das Reaktionsgemisch wurde noch zweimal mit 200 ml Methanol gewaschen.

Die organische Phase wurde bei 140 °C/4 mbar am Rotationsverdampfer eingeengt. Man erhielt 96 g α,ω-(4-Hydroxyphenyl)polyisobuten als helle, zähflüssige Masse.
¹H-NMR (in CD₂Cl₂, 16 Scans bei 500 MHz):
Die olefinischen Signale (5,7 ppm; 5,1 ppm; 4,8 und 4,6 ppm) waren verschwunden, zwei neue Dublett-Signale traten bei 6,7 und 7,2 ppm auf, entsprechend 7,5 H-Atomen.

### Beispiel 17 (Umsetzung eines Polyisobutens mit H₂S)

Im 0,3 l-Rührautoklav wurde die Lösung von 1,9 g (7,5 mmol) BF₃-Phenolkomplex in 20 ml CH₂Cl₂ vorgelegt. Dann presste man bei Raumtemperatur 15 g H₂S und anschließend 100 g (0,02 mol) des Polyisobutens aus Beispiel 1 in 100 ml CH₂Cl₂ auf. Man hielt 4 h bei Raumtemperatur, entspannte den Autoklaven und leitete das überschüssige H₂S zur Vernichtung in Chlorbleichlauge ein. Die Lösung wurde mit Wasser gewaschen und bei 140 °C/4 mbar am Rotationsverdampfer eingeengt. Man erhielt 89 g α,ω-Polyisobutendithiol als helle, zähflüssige Masse.
¹H-NMR (in CD₂Cl₂, 16 Scans bei 500 MHz):
Neues Signal bei 1,9 ppm, entsprechend 1,9 H-Atomen (-SH).

## Patentansprüche

1. Verfahren zur Herstellung eines Isobutenpolymers durch Umsetzung von
a) Isobuten und
b) einer Verbindung der Formel I 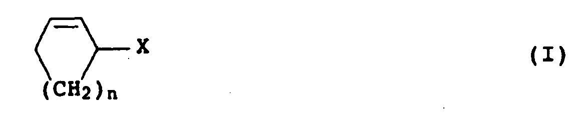 worin
X für Halogen, C₁-C₆-Alkoxy oder C₁-C₆-Acyloxy und
n für 1, 2 oder 3 steht,
in Gegenwart
c) einer Lewis-Säure.

2. Verfahren nach Anspruch 1, wobei es sich bei der Verbindung der Formel I um 3-Chlorcyclopenten handelt.

3. Verfahren nach Anspruch 1 oder 2, wobei die Umsetzung außerdem in Gegenwart eines Elektronendonors erfolgt.

4. Verfahren nach einem der vorhergehenden Ansprüche, wobei die Umsetzung in einem aromatischen Kohlenwasserstoff oder in einem Lösungsmittelgemisch eines halogenierten Kohlenwasserstoffs und eines aliphatischen oder aromatischen Kohlenwasserstoffs erfolgt.

5. Verfahren nach Anspruch 4, wobei der halogenierte Kohlenwassterstoff unter Chlormethan, Dichlormethan, Trichlormethan, 1-Chlorbutan und Chlorbenzol, und der aliphatische oder aromatische Kohlenwasserstoff unter Butan, Pentan, Neopentan, Hexan, Cyclohexan, Methylcyclohexan, Heptan, Octan, Benzol, Toluol und Xylol ausgewählt ist.

6. Verfahren nach einem der vorhergehenden Ansprüche, wobei die Lewis-Säure unter Titantetrachlorid, Bortrichlorid, Zinntetrachlorid, Aluminiumtrichlorid, Dialkylaluminiumchloriden, Alkylaluminiumdichloriden, Vanadiumpentachlorid, Eisentrichlorid und Bortrifluorid ausgewählt ist.

7. Verfahren nach einem der Ansprüche 3 bis 6, wobei der Elektronendonor unter Pyridinen, Amiden, Lactamen, Ethern, Aminen, Estern, Thioethern, Sulfoxiden, Nitrilen, Phosphinen und nicht polymerisierbaren, aprotischen siliziumorganischen Verbindungen, die wenigstens einen über Sauerstoff gebundenen organischen Rest aufweisen, ausgewählt ist.

8. Verfahren nach einem der vorhergehenden Ansprüche, wobei das distale Ende des erhaltenen lebenden Isobutenpolymers mit wenigstens einem Comonomeren umgesetzt wird.

9. Verfahren nach einem der vorhergehenden Ansprüche, wobei das distale Kettenende des erhaltenen lebenden Isobutenpolymers unter Ausbildung einer ethylenisch ungesättigten Gruppe terminiert wird.

10. Verfahren nach Anspruch 9, wobei die Terminierung die Umsetzung mit einer Trialkylallylsilanverbindung, einem konjugierten Dien, eine thermische Behandlung oder eine Behandlung mit einer Base umfasst.

11. Verfahren nach einem der Ansprüche 1 bis 8, wobei die Polymerisation durch Zusatz einer protischen Verbindung abgebrochen wird.

12. Verfahren nach einem der Ansprüche 1 bis 8, wobei das erhaltene lebende Isobutenpolymer mit einem Kopplungsmittel umgesetzt wird, wodurch zwei oder mehrere Polymerketten über ihr distales Ende miteinander verbunden werden.

13. Verfahren nach Anspruch 12, wobei das Kopplungsmittel ausgewählt ist unter
i) Verbindungen, die wenigstens zwei 5-gliedrige Heterocyclen mit einem unter Sauerstoff, Schwefel und Stickstoff ausgewählten Heteroatom aufweisen,
ii) Verbindungen mit wenigstens zwei allylständigen Trialkylsilylgruppen, und
iii)Verbindungen mit wenigstens zwei konjugiert zu jeweils zwei aromatischen Ringen angeordneten Vinylidengruppen.

14. Isobutenpolymer, an wenigstens einem Molekülende terminiert durch eine Gruppe der Formel II 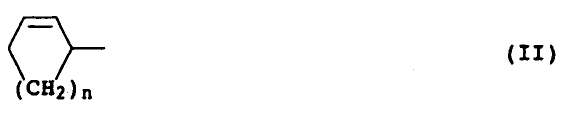 worin n für 1, 2 oder 3 steht oder ein Funktionalisierungsprodukt davon, erhältlich durch
i) Hydrosilylierung,
ii) Hydrosulfurierung,
iii) elektrophile Substitution an Aromaten,
iv) Epoxidierung und gegebenenfalls Umsetzung mit Nucleophilen,
v) Hydroborierung und gegebenenfalls oxidative Spaltung,
vi) Umsetzung mit einem Enophil in einer En-Reaktion,
vii) Addition von Halogenen oder Halogenwasserstoffen oder
viii) Hydroformylierung.

## Claims

1. A process for preparing an isobutene polymer by reacting
a) isobutene and
b) a compound of the formula I 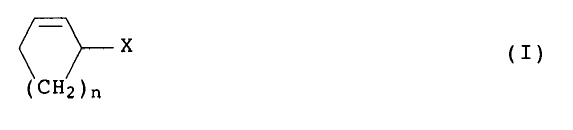 where
X is halogen, C₁-C₆-alkoxy or C₁-C₆-acyloxy and
n is 1, 2 or 3,
in the presence of
c) a Lewis acid.

2. The process according to claim 1, wherein the compound of the formula I is 3-chlorocyclopentene.

3. The process according to claim 1 or 2, wherein the reaction is carried out in the additional presence of an electron donor.

4. The process according to any of the preceding claims, wherein the reaction is carried out in an aromatic hydrocarbon or in a solvent mixture of a halogenated hydrocarbon and an aliphatic or aromatic hydrocarbon.

5. The process according to claim 4, wherein the halogenated hydrocarbon is selected from among chloromethane, dichloromethane, trichloromethane, 1-chlorobutane and chlorobenzene, and the aliphatic or aromatic hydrocarbon is selected from among butane, pentane, neopentane, hexane, cyclohexane, methylcyclohexane, heptane, octane, benzene, toluene and xylene.

6. The process according to any of the preceding claims, wherein the Lewis acid is selected from among titanium tetrachloride, boron trichloride, tin tetrachloride, aluminum trichloride, dialkylaluminum chlorides, alkylaluminum dichlorides, vanadium pentachloride, iron trichloride and boron trifluoride.

7. The process according to any of claims 3 to 6, wherein the electron donor is selected from among pyridines, amides, lactams, ethers, amines, esters, thioethers, sulfoxides, nitriles, phosphines and aprotic organosilicon compounds which are not capable of polymerization and bear at least one organic radical bound via oxygen.

8. The process according to any of the preceding claims, wherein the distal end of the living isobutene polymer obtained is reacted with at least one comonomer.

9. The process according to any of the preceding claims, wherein the distal chain end of the living isobutene polymer obtained is terminated to form an ethylenically unsaturated group.

10. The process according to claim 9, wherein the termination comprises reaction with a trialkylallylsilane compound or a conjugated diene, a thermal treatment or a treatment with a base.

11. The process according to any of claims 1 to 8, wherein the polymerization is stopped by addition of a protic compound.

12. The process according to one of claims 1 to 8, wherein the living isobutene polymer obtained is reacted with a coupling agent, two or more polymer chains being connected to one another via their distal end.

13. The process according to claim 12, wherein the coupling agent is selected from among
i) compounds which have at least two 5-membered heterocycles containing a heteroatom selected from among oxygen, sulfur and nitrogen,
ii) compounds having at least two trialkylsilyl groups in allylic positions, and
iii)compounds having at least two vinylidene groups conjugated to in each case two aromatic rings.

14. An isobutene polymer terminated at at least one end of the molecule by a group of the formula II 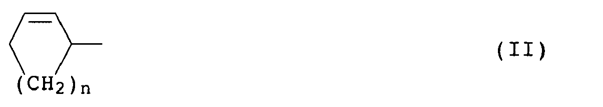 where n is 1, 2 or 3, or a functionalization product thereof, obtainable by
i) hydrosilylation,
ii) hydrosulfurization,
iii) electrophilic substitution on aromatics,
iv) epoxidation and, if appropriate, reaction with nucleophiles,
v) hydroboration and, if appropriate, oxidative cleavage,
vi) reaction with an enophile in an ene reaction,
vii) addition of halogens or hydrogen halides or
viii) hydroformylation.

## Revendications

1. Procédé de préparation d'un polymère d'isobutène par réaction
a) d'isobutène, et
b) d'un composé de la formule I : 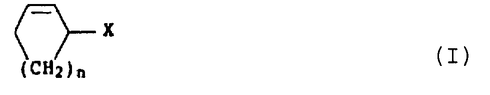 dans laquelle
X représente de l'halogène, un groupe alcoxy en C₁-C₆ ou acyloxy en C₁-C₆, et
n vaut 1, 2 ou 3,
en présence
c) d'un acide de Lewis.

2. Procédé suivant la revendication 1, dans lequel, pour ce qui concerne le composé de la formule I, il s'agit de 3-chlorocyclopentène.

3. Procédé suivant la revendication 1 ou 2, dans lequel la réaction a lieu en outre en présence d'un donneur d'électrons.

4. Procédé suivant l'une des revendications précédentes, dans lequel la réaction a lieu dans un hydrocarbure aromatique ou dans un mélange solvant d'un hydrocarbure halogéné et d'un hydrocarbure aliphatique ou aromatique.

5. Procédé suivant la revendication 4, dans lequel l'hydrocarbure halogéné est choisi parmi du chlorométhane, du dichlorométhane, du trichlorométhane, du 1-chlorobutane et du chlorobenzène, et l'hydrocarbure aliphatique ou aromatique parmi du butane, du pentane, du néopentane, de l'hexane, du cyclohexane, du méthylcyclohexane, de l'heptane, de l'octane, du benzène, du toluène et du xylène.

6. Procédé suivant l'une des revendications précédentes, dans lequel l'acide de Lewis est choisi parmi du tétrachlorure de titane, du trichlorure de bore, du tétrachlorure d'étain, du trichlorure d'aluminium, des chlorures de dialkyl-aluminium, des dichlorures d'alkyl-aluminium, du pentachlorure de vanadium, du trichlorure de fer et du trifluorure de bore.

7. Procédé suivant l'une des revendications 3 à 6, dans lequel le donneur d'électrons est choisi parmi des pyridines, des amides, des lactames, des éthers, des amines, des esters, des thioéthers, des sulfoxydes, des nitriles, des phosphines et des composés organosiliciques aprotiques, non polymérisables, qui présentent au moins un radical organique relié par de l'oxygène.

8. Procédé suivant l'une des revendications précédentes, dans lequel l'extrémité distale du polymère d'isobutène vivant obtenu est amené à réagir avec au moins un comonomère.

9. Procédé suivant l'une des revendications précédentes, dans lequel l'extrémité de chaîne distale du polymère d'isobutène vivant obtenu est terminée avec réalisation d'un groupe éthyléniquement insaturé.

10. Procédé suivant la revendication 9, dans lequel la terminaison comprend la réaction avec un composé de trialkylallylsilane, un diène conjugué, un traitement thermique ou un traitement avec une base.

11. Procédé suivant l'une des revendications 1 à 8, dans lequel la polymérisation est interrompue par addition d'un composé protique.

12. Procédé suivant l'une des revendications 1 à 8, dans lequel le polymère d'isobutène vivant obtenu est amené à réagir avec un agent de couplage permettant ainsi de relier mutuellement deux ou plusieurs chaînes de polymère par leur extrémité distale.

13. Procédé suivant la revendication 12, dans lequel l'agent de couplage est choisi parmi
i) des composés qui présentent au moins deux hétérocycles pentagonaux comportant un hétéroatome choisi parmi de l'oxygène, du soufre et de l'azote,
ii) des composés comportant au moins deux groupes trialkylsilyle en position allylique, et
iii) des composés comportant au moins deux groupes vinylidène agencés de manière conjuguée à chaque fois avec deux cycles aromatiques.

14. Polymère d'isobutène, terminé à au moins une extrémité de molécule par un groupe de la formule II : 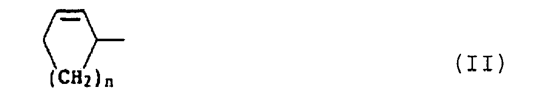 dans laquelle n vaut 1, 2 ou 3, ou un produit de fonctionnalisation de celui-ci, que l'on peut obtenir par
i) hydrosilylation,
ii) hydrosulfuration,
iii) substitution électrophile sur des substances aromatiques,
iv) époxydation et éventuellement réaction avec des nucléophiles,
v) hydroboration et éventuellement scission par oxydation,
vi) réaction avec un énophile dans une ène-synthèse,
vii) addition d'halogènes ou d'halogénures d'hydrogène, ou
viii) hydroformylation.
